**Europäisches Patentamt**

**European Patent Office**

**Office européen des brevets**

(19)

(11) Veröffentlichungsnummer: **0 086 740**
A2

# EUROPÄISCHE PATENTANMELDUNG

(12)

(21) Anmeldenummer: 83810038.6

(22) Anmeldetag: 01.02.83

(51) Int. Cl.³: **B 60 B 3/04**, B 60 B 25/00

(30) Priorität: 15.02.82 DE 3205235

(43) Veröffentlichungstag der Anmeldung: 24.08.83
Patentblatt 83/34

(84) Benannte Vertragsstaaten: **CH FR GB IT LI SE**

(71) Anmelder: **SCHWEIZERISCHE ALUMINIUM AG,
CH-3965 Chippis (CH)**

(72) Erfinder: **Frank, Simon, ALterpostweg 4,
D-7708 Watterdingen (DE)**
Erfinder: **Hodel, Ulf, Hermann Hesse Strasse 11,
D-7707 Engen (DE)**
Erfinder: **Wagner, Alfred, Im Stäudler 21,
D-7705 Steisslingen (DE)**

(54) **Rad für luft- oder gasgefülte Reifen von Kraftfahrzeugen sowie Verfahren zu seiner Herstellung.**

(57) Ein Rad für luft- oder gasgefüllte Reifen von Kraftfahrzeugen mit von einem Felgenring gebildetem und von Felgenhörnern begrenztem Felgenbett sowie einer dem Felgenring zugeordneten Radschüssel soll ohne bei Schmelzschweissnähten mit geringer Festigkeit entstehende Wärmeeinflusszonen dadurch herstellbar sein, dass Felgenring (1) und Radschüssel (4, 14, 24, 34, 44) miteinander reibverschweisst sind, wobei bevorzugt die Radschüssel (4, 14) vom Felgenring (1) umfangen und mit ihm flächig reibverschweisst ist. Zum Herstellen dieses Rades wird der Felgenring (1) oder die Radschüssel (4, 14, 24, 34, 44) fest eingespannt und der jeweils andere Teil unter Rotation angepresst sowie gezielt abgebremst und dabei die Reibzonen beider Teile miteinander reibverschweisst werden sowie das erwärmte Material durch Axialdruck seitlich ausgepresst wird.

SCHWEIZERISCHE ALUMINIUM AG, CH-3965 Chippis

Rad für luft- oder gasgefüllte Reifen von Kraftfahrzeugen sowie Verfahren zu seiner Herstellung

Die Erfindung betrifft ein Rad für luft- oder gasgefüllte Reifen von Kraftfahrzeugen mit von einem Felgenring gebildetem und von Felgenhörnern begrenztem
Felgenbett sowie einer dem Felgenring zugeordneten
Radschüssel. Zudem erfaßt sie ein Verfahren zu dessen
Herstellung.

Da Räder, Achsen und zugehörige Haltevorrichtungen an Fahrzeugen ungefederte Massen bilden, ist es für Fahrsicherheit
und Fahrkomfort wichtig, das Gewicht solcher Fahrzeugteile
möglichst gering zu halten. Das Bestreben, leichte Räder
zu verwenden, führte einerseits zur konstruktiven Leichtbauweise etwa in Form von Drahtspeichenrädern, anderseits
zur Wahl leichter Werkstoffe, wie dies bei gegossenen oder
geschmiedeten Rädern aus Aluminium- oder Magnesiumlegierungen der Fall ist.

Während die Kosten für Drahtspeichenräder zu hoch sind, hat sich bei Leichtmetallrädern als nachteilig herausgestellt, daß die beispielsweise gegenüber Stahl geringeren Festigkeitswerte und die erhöhte Kerbrißanfälligkeit der Leichtmetalle an den mechanisch hoch beanspruchten Stellen des Rades -- insbesondere an den Übergängen zwischen Felgenring und Radschüssel, aber auch im Bereich von Nabenflanschen -- Materialanhäufungen notwendig machen, die das Produkt unerwünscht verteuern und den Gewichtsvorteil der verwendeten Metalle in erheblichem Maße wieder aufheben.

Einteilige Gußräder aus Aluminium werden üblicherweise im Niederdruck-Kokillenguß hergestellt, sind leichter als Stahl und genauer als Stahlräder, die beispielsweise einteilig geschmiedet werden. Einteilige Schmiederäder benötigen viele Arbeitsgänge und schmiedetechnisch bedingte große Radien an den Übergängen, was zu erheblichen Gewichtseinflüssen führt. Aluminiumgußräder aus einem bekanntlich spröden Werkstoff sind teuerer als Stahlräder und müssen im Hinblick auf gußtechnische Probleme teilweise schwerer ausfallen, als dies festigkeitsmäßig erforderlich wäre.

Auch ist es bekanntgeworden, einteilige Aluminiumräder aus Strangpreßprofilen herzustellen, wobei allerdings Querschweißnähte entstehen; das Styling bleibt hier zudem begrenzt.

Die DE-OS 2 745 163 offenbart ein mehrteiliges Rad der eingangs erwähnten Art, zu dessen Herstellung ein stranggepreßtes Verbundprofil dient, was eine günstige Verbindungsmöglichkeit zwischen Aluminium- und Stahlteilen

erlaubt; der Felgenring ist stranggepreßt, ein metallisch mit seinem Leichtmetall verbundenes Stahlband dient zur Befestigung der stählernen Radschüssel, die damit schmelzverschweißt werden kann.

In dem Bestreben, Fahrzeugräder aus Leichtmetall und -- fertigungstechnisch einfacher -- aus mehreren Teilen dadurch zu verbessern, daß er die bei Schmelzschweißnähten entstehende Wärmeeinflußzone und deren reduzierte Festigkeit ebenso vermeidet wie die geringe dynamische Belastbarkeit der Schmelzschweißnaht, daß er die Eloxierbarkeit derartiger Räder erhält und mechanische Vorbereitungszeiten mindert. Zudem sollen zusätzliche Verbindungselemente wie Nieten, Schrauben od. dgl. unnötig werden, ebenfalls ein Nacharbeiten nach dem Zusammenfügen von Schüssel und Ring, welches bisher zur Erzielung geforderter Rundlaufeigenschaften erforderlich war. Eine weitere Anforderung an das zu verbessernde Rad ist die Vermeidung einer Spaltkorrosion.

Nicht ohne Bedeutung ist bei Leichtmetallrädern das sogenannte Styling, so daß auch die Gestaltbarkeit derartiger Räder verbessert werden soll, insbesondere zur Ausmerzung von Schmutz und Korrosionsansatzecken.

Zur Lösung dieser Aufgabe führen eine Vorrichtung und/oder ein Verfahren nach wenigstens einem der Patentansprüche.

Dank dieser Maßgaben werden Schmelzschweißnähte vermieden, ebenso ein durch Wärmeeinwirkung erweichtes und umgewandeltes Gefüge im Schweißbereich, was beispielsweise die Eloxierbarkeit ermöglicht. Es entsteht eine umlaufende, statisch und dynamisch hochfeste Verbindung, d. h. die Verbindungszone ist gasdicht, Spaltkorrosion ausgeschlossen. Ein weiterer Vorteil ist, daß keine oder nur sehr geringe Vorbereitungen der zu verbindenden Teile erforderlich werden, dennoch ein sehr genaues Zusammenfügen möglich wird, also gute Rund- und Planlaufeigenschaftem am fertigen Rad entstehen. Ein besonderer Vorzug jedoch ist, daß hier auch unterschiedliche Werkstoffe schweißbar sind. Die Kombination Stahl/Aluminium wirft also -- auch ohne Verbundprofile -- keine wesentlichen Probleme mehr auf.

Nach einem weiteren Merkmal der Erfindung ist die Rohrkante stumpf an die Innenseite der Radschüssel reibgeschweißt.

Auch hat es sich als günstig erwiesen, den Felgenring mit einem der Felgenhörner zu versehen, während das andere Felgenhorn von der Radschüssel gebildet wird. Bei einem derartigen Rad ist bevorzugt die Mittelachse des Felgenringes außerhalb des engsten Radius des Felgenbettes angeordnet, also in Abstand zum sogenannten Tiefbett.

Der Felgenring kann von einem Strangpreßprofil, einem Gußteil oder einem Blechstreifen gebildet werden, die Felgenschüssel bevorzugt geschmiedet, gegossen oder aus einem Blech tiefgezogen sein.

Das fertige Rad weist die folgenden Eigenschaften auf: geringes Gewicht, hohe dynamische Belastbarkeit und Festigkeit, hohe Korrosionsbeständigkeit, günstige Rundlauf- und Plangenauigkeit. Zudem können alle bekannten Verfahren zur Herstellung der einzelnen Radteile herangezogen werden, eine bezüglich des Zusammenfügens zu treffende Auswahl der Herstellungsverfahren für die Einzelstücke ist nicht mehr erforderlich.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

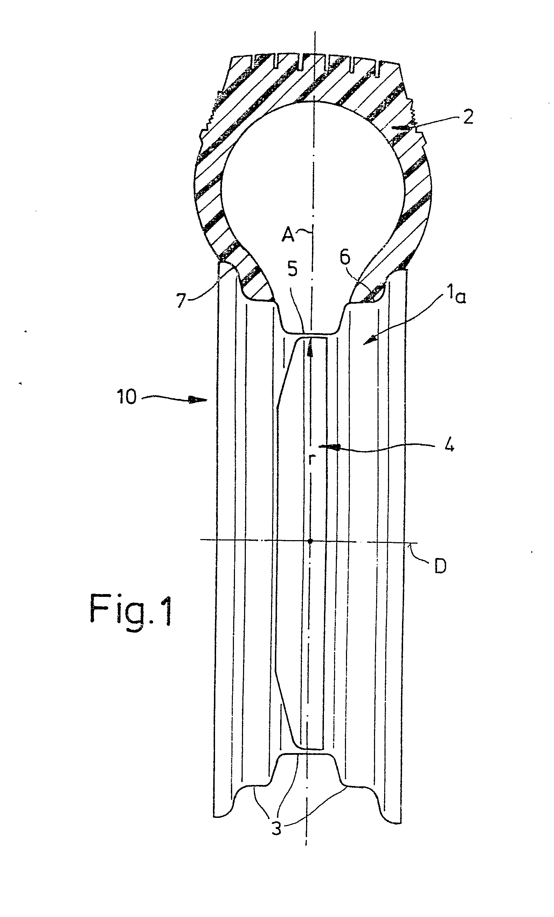

Fig. 1: den schematisierten Schnitt durch einen Teil eines Felgenrades mit eine Radschüssel umgebendem Felgenring;

Fig. 2 bis 4:
gegenüber Fig. 1 vergrößerte Ausschnitte aus erfindungsgemäßen Ausführungsformen von Felgenrädern mit jeweils in einem Felgenring eingesetzter Radschüssel;

Fig. 5 und 6:
geschnittene Ausschnitte aus Felgenrädern mit zwei Teilradschüsseln:

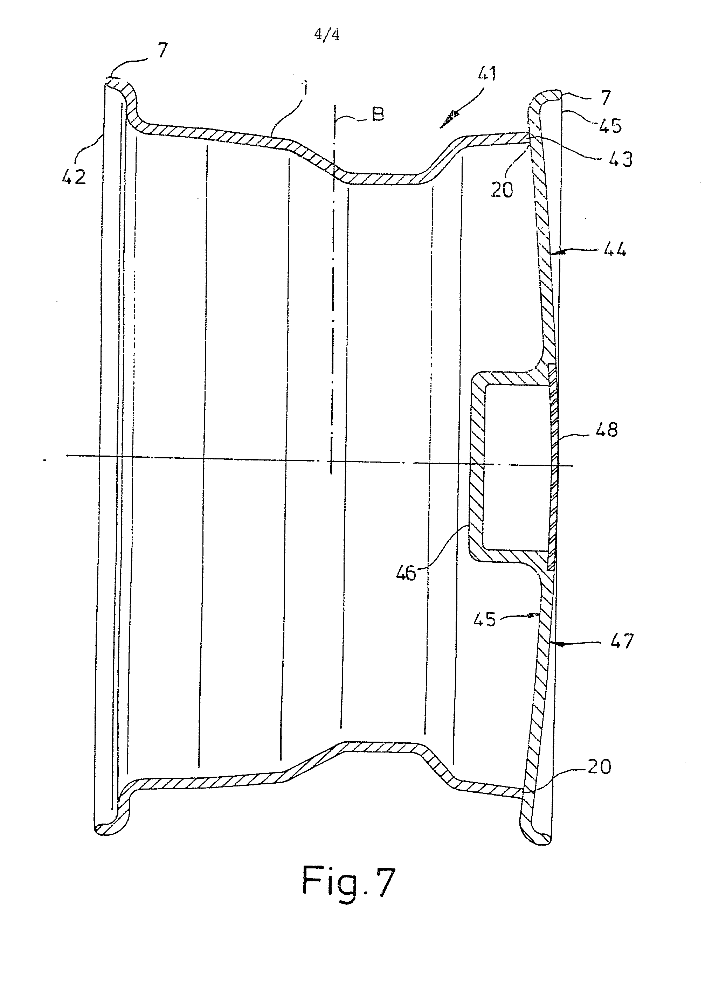

Fig. 7: ein Felgenrad mit einer Radschüssel vorgesetztem Felgenring im Querschnitt.

Das in Fig. 1 angedeutete Felgenrad 10 weist an einem kranzartigen Felgenring $1_a$ einen Luftreifen 2 auf sowie innerhalb des -- für letzteren ein Felgenbett 3 bildenden -- Felgenringes $1_a$ eine in der Radialachse A des Felgenrades 10 angeordnete Radschüssel $4_a$. Hierbei ist die Radialachse A auch Symmetrieachse für das Felgenbett 3, an dessen engstem Innenradius r -- dem sogenannten Tiefbett 5 -- jene Radschüssel $4_a$ festgelegt ist. An das Tiefbett 5 schließt beidseits jeweils eine Felgenschulter 6 als Reifensitz an, die in ein Felgenhorn 7 übergeht.

Die Drehachse des Felgenrades 10 ist bei D angedeutet.

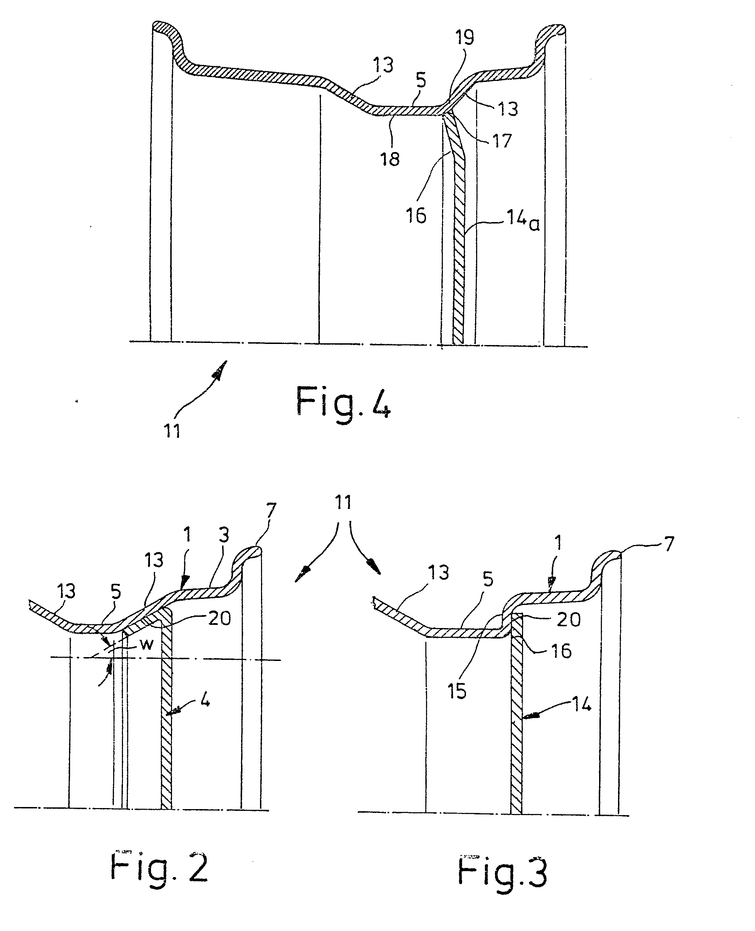

Beim erfindungsgemäßen Felgenrad 11 nach Fig. 2 ist die Radschüssel 4 mit einem in einem Winkel w von etwa 30° konisch geneigten Rand 12 versehen, der sich an die entsprechend geneigte Seitenwand 13 des Tiefbettes 5 des Felgenringes 1 anschmiegt und mit dieser durch Reibschweißen verbunden ist. Hierbei entsteht zwischen dem geneigten Rand 12 der Radschüssel 4 und der Seitenwand 13 des Felgenringes 1 eine nicht näher dargestellte ringförmige Reibschweißzone 20, die sich auch zwischen dem flächigen Randbereich 16 der scheibenartigen Radschüssel 14 nach fig. 3 und der hier rechtwinklig zum Tiefbett 5 gerichteten Seitenwand 15 ergibt.

Der Randbereich 16 der flachen Radschüssel 14$_a$ nach Fig. 4 ist tellerrandartig aus der Scheibenebene herausgebogen, und die Radschüsselkante 17 mit der Felgenringinnenseite 18 stumpf reibverschweißt - und zwar am Übergang 19 zwischen Tiefbett 5 und Seitenwand 13.

Die beschriebenen Felgenringe 1 können aus Blechstreifen, Rohrabschnitten oder Gußteilen gefertigt sein, die Radschüsseln oder Radscheiben 4,14 aus Blechteilen, Gußteilen oder Schmiedeteilen.

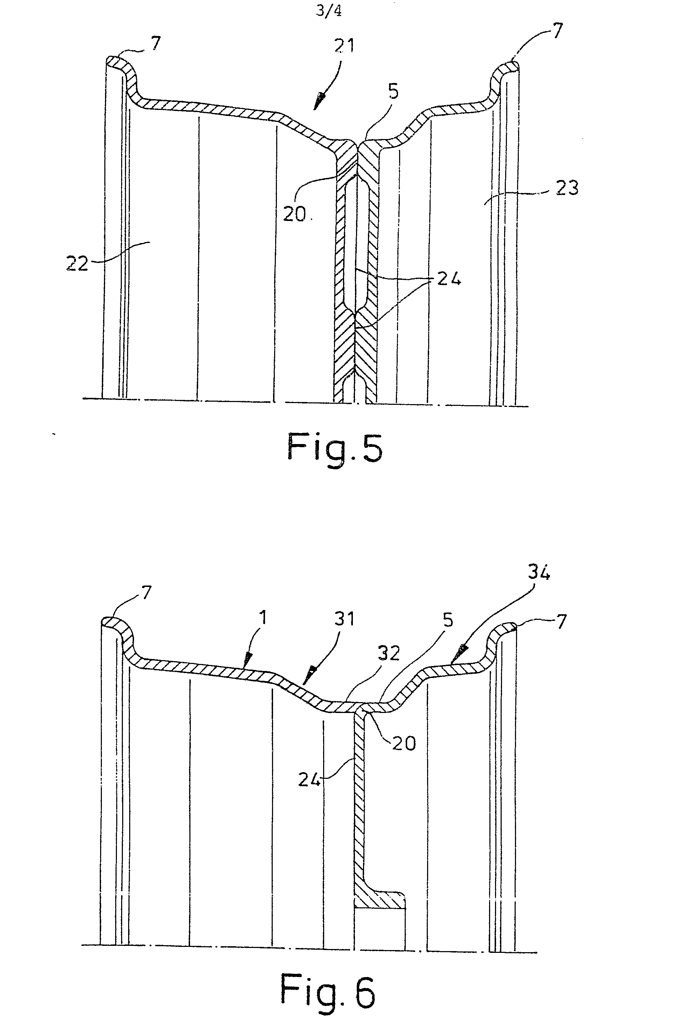

Das Felgenrad 21 der Fig. 5 besteht aus zwei Teilradschüsseln 22,23, die im Bereich des Tiefbettes 5 aneinanderstoßen und im Bereich ihrer Unterseiten oder Außenflächen 24 miteinander reibverschweißt sind. Die Reibschweißzonen 20 werden hier von Ringrippen 25 gebildet, zwischen denen Ringkanäle 26 verlaufen. Diese Teilradschüsseln 22,23 können aus Blechteilen tiefgezogen oder Gußteile bzw. Schmiedeteile sein, und zwar von gleichem oder unterschiedlichem Werkstoff.

Beim Felgenrad 31 nach Fig. 6 stößt ein rohrartiger
Felgenring 1 stumpf gegen die Unterseite 24 einer
Radschüssel 34, die zusammen mit der rohrartigen Randzone 32 des Felgenringes 1 das Tiefbett 5 bildet. Hier
ist eines der Felgenhörner 7 in die Radschüssel 34
integriert, während das andere Felgenhorn 7 Teil des
rohrförmigen Felgenringes 1 ist.

Bei dem in Fig. 7 gezeigten Felgenrad 41 liegt das
Tiefbett 5 des rohrartigen Felgenringes 1 außerhalb
von dessen Mittelachse B. Die eine Rohrkante 42 des
Felgenringes 1 ist zu einem Felgenhorn 7 verformt,
während die andere Rohrkante 43 stumpf gegen die vorgesetzte Radschüssel 44 stößt; deren Rand 45 ist Teil
des anderen Felgenhornes 7.

Die stumpfe Rohrkante 43 des Felgenringes 1 -- welche die das Tiefbett 5 enthaltende Felgenringhälfte
begrenzt -- wird mit der Radschüsselinnenseite 45
durch einen Reibschweißvorgang fest verbunden; die
Reibschweißzone 20 ist in der Zeichnung aus Gründen
der Übersichtlichkeit nicht eingehender dargestellt.

Im Zentrum der Radschüssel 44 findet sich eine zur
Mittelachse B gerichtete zentrische Nabeneinformung
46; diese napfartige Einformung ist an der Radschüsselaußenseite 47 von einem Einsatz 48 überdeckt.

Zur Herstellung des Felgenrades 11, 21, 31, 41 wird
der eine Teil -- beispielsweise die Radschüssel 4,
14,24,34,44 -- fest eingespannt, während der andere
Teil -- z. B. der Felgenring 1 -- in Rotation versetzt
wird. Nun wird der Felgenring 1 gegen die Radschüssel
gepreßt und gezielt abgebremst. Dabei erwärmen sich
die Werkstoffe im Bereich der Verbindungsfuge und
verschweißen. Erwärmtes Material wird durch Axialdruck herausgepreßt, so daß die verschweißten Teile
ohne Wärmeeinflußzone verbleiben.

0066740

Patentansprüche

1. Rad für luft- oder gasgefüllte Reifen von Kraftfahrzeugen mit von einem Felgenring gebildetem und von Felgenhörnern begrenztem Felgenbett sowie einer dem Felgenring zugeordneten Radschüssel, dadurch gekennzeichnet,

dass Felgenring (1) und Radschüssel (4,14,24,34,44) miteinander reibverschweisst sind.

2. Rad nach Anspruch 1, dadurch gekennzeichnet, dass die Radschüssel (4,14) vom Felgenring (1) umfangen und mit ihm flächig reibverschweisst ist (Fig. 2,3).

3. Rad nach Anspruch 1 oder 2, dadurch gekennzeichnet, dass die Verbindungsfläche (20) zur Drehachse (D) des Felgenrades (11) in einem Winkel (w) von etwa 30° konisch geneigt ist.

4. Rad nach Anspruch 1, dadurch gekennzeichnet, dass die Radschüssel (4,14) vom Felgenring (1) umfangen und mit ihm im Bereich ihrer Umfangskanten (17) reibverschweisst ausgebildet ist.

5. Rad nach Anspruch 1, gekennzeichnet durch zwei Radschüsseln (22,23), die miteinander an ihren Schüsselböden (24) reibverschweisst sind, wobei der Schüsselboden jeweils von einem Schüsselrand umgeben ist und beide Schüsselränder das Felgenbett (3) erzeugen.

BAD ORIGINAL

6. Rad nach Anspruch 5, dadurch gekennzeichnet, dass die einander zugekehrten Schüsselböden mit Rippen, insbesondere Ringrippen (25), versehen sind, wobei die Rippen miteinander reibverschweisst sind.

7. Rad nach Anspruch 1, dadurch gekennzeichnet, dass der Felgenring (1) rohrartig ausgebildet und eine Rohrkante (43) mit der Radschüssel (24,44) durch einen Reibverschweissvorgang verbunden ist (Fig. 6,7).

8. Rad nach Anspruch 7, dadurch gekennzeichnet, dass die Rohrkante (43) stumpf mit der Unterseite (45) der Radschüssel (44) reibverschweisst ist.

9. Verfahren zum Herstellen eines Rades für luft- oder gasgefüllte Reifen von Kraftfahrzeugen mit von einem Felgenring gebildetem und von Felgenhörnern begrenztem Felgenbett sowie einer dem Felgenring zugeordneten Radschüssel, dadurch gekennzeichnet, dass Felgenring oder Radschüssel fest eingespannt und der jeweils andere Teil unter Rotation angepresst sowie gezielt abgebremst wird und dabei die Reibzonen beider Teile miteinander reibverschweisst werden sowie das erwärmte Material durch Axialdruck seitlich ausgepresst wird.

10. Verfahren zum Herstellen eines Rades für luft- oder gasgefüllte Reifen von Kraftfahrzeugen mit von einem Felgenring gebildetem und von Felgenhörnern begrenztem Felgenbett sowie einer dem Felgenring zugeordneten Radschüssel, dadurch gekennzeichnet, dass eine Radschüssel fest eingespannt und gegen ihren Schüsselboden der Schüsselboden einer rotierenden weiteren Radschüssel angepresst sowie gezielt abgebremst wird, wobei die Reibzonen beider Teile miteinander reibverschweisst werden und das erwärmte Material durch Axialdruck seitlich ausgepresst wird.

Fig.1

0086740

Fig. 4

Fig. 2

Fig. 3

Fig.5

Fig.6

0086740

Fig.7